# EUROPEAN PATENT APPLICATION

(11) **EP 2 031 686 A1**
(43) Date of publication of application: **04.03.2009**
(21) Application number: 07767161.8
(22) Date of filing: 19.06.2007
(51) Int. Cl.: H01M 8/02, H01M 8/12

(54) **PLATE SOLID OXIDE FUEL CELL**

(30) Priority: 22.06.2006 JP 2006172783
(71) Applicant: Yanmar Co., Ltd., Osaka-shi, Osaka 530-0013 (JP)
(72) Inventor: FUJII, Yasuyoshi, Osaka-shi, Osaka 530-0013 (JP)
(74) Representative: Draper, Martyn John
(86) International application number: PCT/JP2007/062287
(87) International publication number: WO 2007/148677

(57) **Abstract**

For a plate solid oxide fuel cell, costs thereof are made low and the thermal conductivity thereof is improved, and further only by effect of the shape thereof, a burning gas is sealed while a back diffusion phenomenon of air from the outside is restrained. Plate-shaped unit cells 1 each composed of a plate-shaped solid electrolyte 2, and a fuel electrode 4 and an air electrode 3 arranged on both side surfaces thereof, respectively, are arranged to be alternated with metallic separators 10. A fuel supplying room S1 is formed between the fuel electrode 4 and one of the metallic separators 10; and an air supplying room S2 is formed between the air electrode 3 and one of the metallic separator 10. A peripheral edge 2a of the solid electrolyte 2 overhangs outwards from the fuel electrode 4 and the air electrode 3, and is sandwiched directly from both sides thereof between two metal plates 21 and 22. Peripheral edges of the two metal plates 21 and 22 overhang outwards from the solid electrolyte 2. A metallic spacer 23 surrounding the peripheral edge of the solid electrolyte 2 from the outside is sandwiched between the peripheral edges of the metal plates 21 and 22. A gap between the two metal plates 21 and 22 and both side surfaces of the peripheral edge 2a of the solid electrolyte 2 constitutes a maze for a fuel.

## Description

### Technical Field

The present invention relates to a fuel cell, in particular, a plate (flat plate-shaped) solid oxide fuel cell wherein: plate-shaped unit cells (single cells) each composed of a plate-shaped solid electrolyte, and a fuel electrode and an air electrode arranged on both side surfaces of the electrolyte, respectively, are arranged to be alternated with metallic separators; a fuel supplying room is formed between the fuel electrode and the metallic separator opposite to this fuel electrode; and an air supplying room is formed between the air electrode and the metallic separator opposite to this air electrode.

### Background Art

Solid oxide fuel cells (SOFCs) of this type have a high operating temperature of 750 to 1000°C as compared with other fuel cells such as solid polymer fuel cells and phosphoric acid fuel cells; however, attention has been paid thereto as the next generation fuel cells since the power generating efficiency thereof is as high as 45 to 60%. Usually, a solid electrolyte and both electrodes which constitute a fuel unit cell are each made of a heat-resistant ceramic. As for its separator, which is classified to a structure made of a ceramic (Patent Document 1) and a structure made of a metal (Patent Documents 2 and 3).

About the structure using a ceramic separator, the material costs thereof are high. Furthermore, since the durability of the ceramic is not sufficient against a rapid change in temperature, when the cell is started up, the temperature thereof cannot be rapidly raised up to a high operating temperature. As a result, the starting-up period becomes long and, for example, ten hours plus several hours or several days are required therefor. Accordingly, there remains a problem that the structure is inconvenient for use.

On the other hand, about the structure using a metallic separator, the material costs can be decreased. Furthermore, the thermal conductivity is high, so that the temperature can be rapidly raised to the operating temperature. As compared with the structure using a ceramic separator, the cell having the structure can be started up at a high speed while the cell maintains durability. Thus, convenience for use is improved.

Incidentally, about sealing of a fuel of a plate solid oxide fuel cell, the following structures are known: a seal-attached structure in which in order to discharge a remaining fuel gas which has passed through a fuel unit cell to the outside of the unit cell, the circumference of its fuel electrode is sealed with a sealant made of a glass material to separate the fuel gas from air in such a manner that the fuel gas is not brought into contact with the air; and a sealless structure in which a peripheral edge of a fuel unit cell is made open and a remaining fuel gas is discharged from the open portion and burned (Patent Document 3).

According to the sealless structure, the structure can be made simple and the productivity can be made better; however, a phenomenon that air outside the fuel unit cell enters the inside of its fuel electrode, i.e., the so-called back diffusion phenomenon is easily generated. Thus, when the cell is driven, this back diffusion air and the fuel gas in the fuel unit cell undergo burning reaction so that the burning gas is wasted. Thus, a problem that the power-generating performance deteriorates is caused. Accordingly, about the sealless structure, developed is a cell having a structure wherein a cover having a discharge port having a small diameter is set up in order to cope with the back diffusion phenomenon of the outside air (Patent Document 2 and others).

About the seal-attached structure, this structure can be rendered a closed structure by the following method in a case where the structure has a ceramic separator: a method of forming the separator, a ceramic solid electrolyte and both electrodes so as to be integrated with each other by sintering or the like.
Patent Document 1: Japanese Unexamined Patent Publication No. 2004-146334
Patent Document 2: Japanese Unexamined Patent Publication No. 2005-85521
Patent Document 3: Japanese Unexamined Patent Publication No. 2006-85981

### Disclosure of the Invention

### Problems to be solved by the invention

On the contrary, in the case of using a metallic separator in the seal-attached structure, that is, in the structure wherein a glass sealing material or the like is used to attain sealing, the sealing material is turned into a semi-melted state by high temperature when the cell is driven. When the driving is stopped, the ceramic solid electrolyte and the metallic separator are glued to each other by the sealing material turned into low temperature. The ceramic solid electrolyte, however, may be broken by a difference in thermal expansion between the ceramic and the metal. Moreover, it is feared that a silica component contained in the glass produces a bad effect on the performance of the fuel unit cell.

In a case where the sealless structure using a metallic separator has a structure wherein a fuel unit cell is closed with a cover having a discharge port as described above, invasion of air from the outside onto the fuel electrode side can be restrained to some extent, however, the burning gas that remains is unfavorably discharged from the discharge port to the outside of the fuel unit cell so that the use efficiency of the burning gas falls unavoidably. In the case of collecting this discharged residual burning gas and use the gas in a burning cycle, a bottoming cycle or the like, it is necessary to take some measure for separating, not mixing the burning with air.

An object of the present invention is to provide a plate solid oxide fuel cell which attains the following: by using a metallic separator, costs are decreased and a distribution of the temperature in the whole of the fuel cell is made even by improving the thermal conductivity thereof; and by effect of only the shape thereof, without using any gas-sealing material made of a glass material or the like, a burning gas is sealed, while a back diffusion phenomenon of air from the outside is restrained.

### Means for Solving the Problems

In order to solve the problems, the invention according to a first aspect of the present application is a plate solid oxide fuel cell wherein plate-shaped unit cells each composed of a plate-shaped solid electrolyte, and a fuel electrode and an air electrode arranged on both side surfaces of the solid electrolyte, respectively, are arranged to be alternated with metallic separators; a fuel supplying room is formed between the fuel electrode and the side surface of the metallic separator opposite to this fuel electrode; and an air supplying room is formed between the air electrode and the side surface of the metallic separator opposite to this air electrode; characterized in that a peripheral edge of the solid electrolyte overhangs outwards from peripheral edges of the fuel electrode and the air electrode, and is sandwiched directly from both sides thereof between two metal plates; peripheral edges of the two metal plates overhang outwards from the peripheral edge of the solid electrolyte; a space between the peripheral edges of the two metal plates is closed with a metallic spacer surrounding the peripheral edge of the solid electrolyte from the outside; and a gap between the two metal plates and both side surfaces of the peripheral edge of the solid electrolyte constitutes a maze for a fuel.

According to this structure, (1) by use of the metallic separators, costs for the material can be decreased and further the thermal conductivity is improved so that a distribution of the temperature in the whole of the fuel cell is made even. Thus, the durability is kept while the cell can be started up toward an operating temperature at a high speed.
(2) By effect of the metallic spacers, remaining fuel is prevented from being discharged directly to the outside from the peripheral edges of the fuel unit cells, and further outside air is prevented from back-diffusing toward the fuel electrode side. In this way, a deterioration in the fuel electrodes can be prevented and further the use efficiency of the fuel can be improved. Moreover, burning of a residual fuel as in the prior art (Patent Document 3) is avoided, thereby preventing oxidization of the fuel electrodes, so as to improve the durability. Additionally, it is unnecessary to use any glass-based sealing material; therefore, it is possible to prevent damage of the solid electrolytes based on a difference in thermal expansion between the metallic separators and the ceramic solid electrolytes.

In the above-mentioned plate solid oxide fuel cell, a fuel passage forming member which is made of metal and has a fuel inlet port and a discharge port may be sandwiched between the metal plate at the fuel electrode side and the metallic separator opposite to this metal plate, and the fuel supplying room and a fuel passage connected to this room may be made of this metallic separator, this metal plate, and the fuel passage forming member.

According to this structure, the metal plates and the metallic separators can be used, without being subjected to any especial working, in the state that the plates and the separator are each in a simple form, for example, a rectangular plate form. Thus, no labor is necessary for working the materials.

In the above-mentioned plate solid oxide fuel cell, a crushed-form flat cylinder member may be used to form the metal plate at the fuel electrode side and the metallic separator opposite to this metal plate so as to be integrated with each other, and the fuel supplying room and a fuel passage connected to this room may be formed inside the cylinder member.

According to this structure, the number of parts can be decreased and further the sealability of the peripheral edges of the fuel unit cells is improved.

### Brief Description of the Drawings

[Fig. 1] The figure is a partial, vertical sectional view of a stack of a plate solid oxide fuel cell to which the present invention is applied.
[Fig. 2] The figure is a perspective view of a plate-shaped unit cell.
[Fig. 3] The figure is an exploded perspective view of the plate-shaped unit cell, a separator, metal plates, and a spacer.
[Fig. 4] The figure is an enlarged, vertical sectional view of an arrow IV region in Fig. 1.
[Fig. 5] The figure is a graph showing experimental results of sealability.
[Fig. 6] The figure is a perspective view illustrating a modified example of one of the metal plates.

### Description of reference numbers

- 1: plate-shaped unit cell(s)
- 2: solid electrolyte(s)
- 3: air electrode(s)
- 4: fuel electrode(s)
- 10: metallic separator(s)
- 11: fuel electrode side power collector(s) (fuel supplying room(s))
- 12: air electrode side power collector(s) (air supplying room(s))
- 21: first metal plate(s)
- 22: second metal plate(s)
- 23: metallic spacer(s)
- 31: fuel passage(s)
- 32: air passage(s)
- 33: fuel passage forming member(s)
- C1 and C2: gaps (gap mazes)

### Best Mode for Carrying Out the Invention

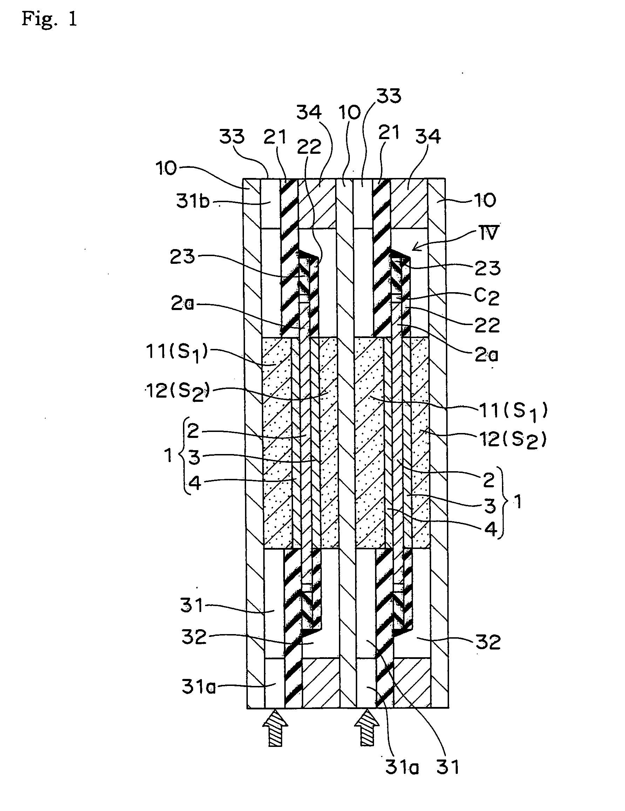

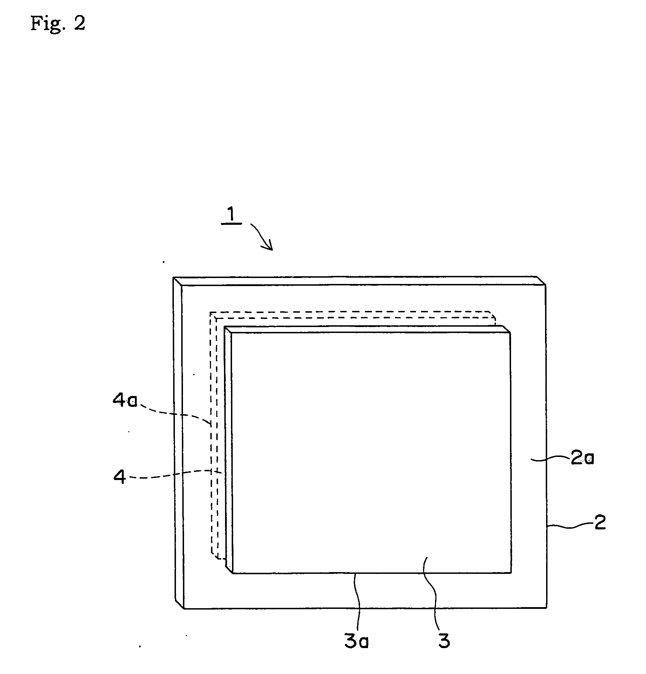

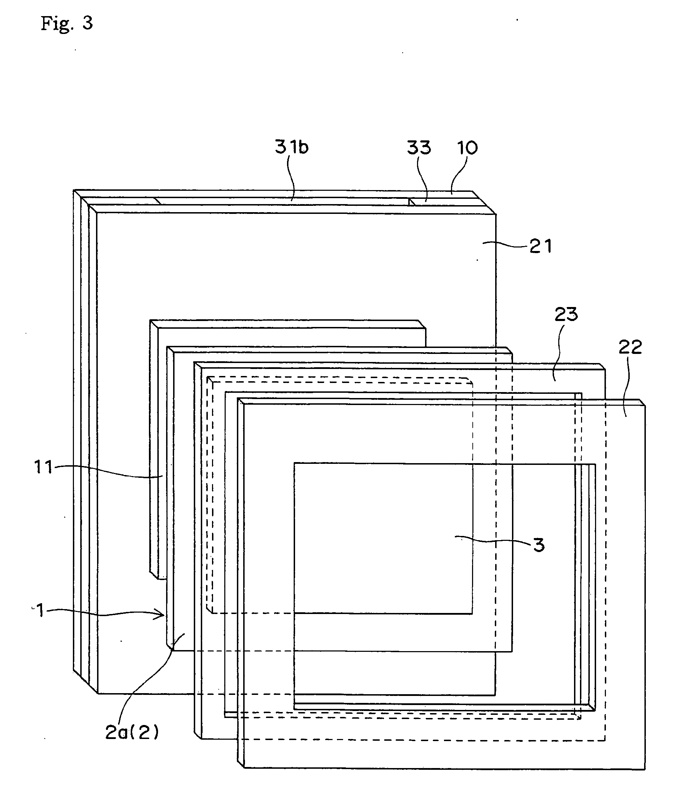

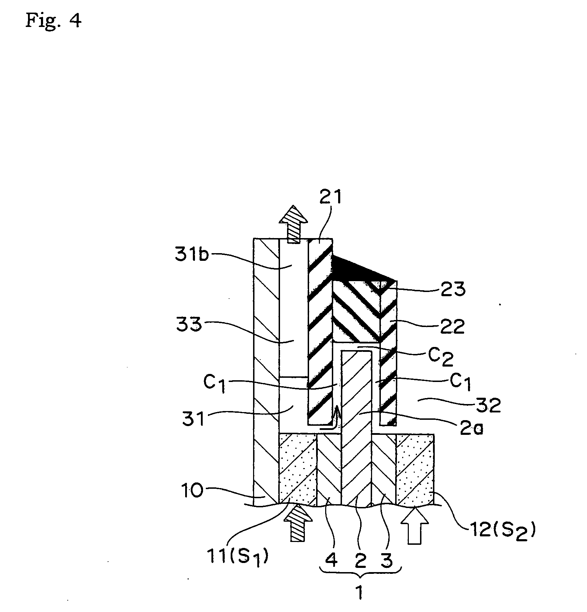

Figs. 1 to 5 illustrate an embodiment of the present invention; and Fig. 1 is a partial, vertical sectional view of a stack of a plate solid oxide fuel cell, Fig. 2 is a perspective view of a plate-shaped unit cell, Fig. 3 is an exploded perspective view of the plate-shaped unit cell, a metallic separator, metal plates, and a metallic spacer, and Fig. 4 is an enlarged, vertical sectional view of an arrow IV region in Fig. 1. The figures are illustrated in such a manner that the dimension in the thickness direction of any unit cell, as compared with the dimension in the surface direction thereof, is made larger than the actual dimension thereof in order to make the understanding of the structure easy.

### (Structure of a plate-shaped unit cell)

In Fig. 2, a plate-shaped unit cell 1 is composed of three layers. The layers are: a plate-shaped solid electrolyte 2; and an air electrode (oxidizer electrode) 3 and a fuel electrode 4, which are each in a plate form and are bonded to both side surfaces of the solid electrolyte 2, respectively, so as to be integrated with the side surfaces. The solid electrolyte 2, and both of the electrodes 3 and 4 are each made rectangular (square or rectangular). The area of the solid electrolyte 2 is larger than that of each of the electrodes 3 and 4, so that a peripheral edge 2a of the solid electrolyte 2 overhangs outwards from peripheral edges 3a and 4b of both the electrodes 3 and 4 over the entire circumference of the edge 2a.

The solid electrolyte 2 is an oxide ion conductor, and is made of, for example, a dense zirconia-based ceramic. At an operating temperature of 800°C or thereabout, oxide ions (O²⁻) shift between both the electrodes 3 and 4. The air electrode 3 and the fuel electrode 4 are electron conductors, and are each made of a ceramic material having a high electron conductivity. For example, the air electrode 3 is made mainly of a porous ceramic made of LaMnO₃ or LaCoO₃, which has electron conductivity, or made of a solid solution wherein La in the oxide is partially substituted with Sr, Ca or the like. The fuel electrode 4 is made mainly of a material obtained by mixing a metal with a ceramic and then sintering the mixture, such as Ni-YSZ or Co-YSZ.

### (Outline of a stack)

In Fig. 1, a stack of a plate solid oxide fuel cell is made by arranging the same plural plate-shaped unit cells 1 as described above and plural metallic separators 10 at regular intervals and in parallel inside a heat-insulating box (not illustrated). The space between each fuel electrode 4 and a side surface of the separator 10 opposite to this electrode is a fuel supplying room S1, and a fuel electrode power collector 11 is set up in the fuel supplying room S1. The space between each air electrode 3 and a side surface of the separator 10 opposite to this electrode is an air supplying room S2, and an air electrode powder collector 12 is set up in the air supplying room S2.

The material of the fuel electrode power collector 11 is, for example, a sponge- or felt-form porous body made of a Ni-based alloy or the like. In the same manner, the material of the air electrode power collector 12 is, for example, a sponge- or felt-form porous body made of a Ag-based alloy or the like. Sponge- or felt-form porous bodies are suitable for power collectors having multifunctions since the porous bodies have a power collecting function, a gas and air permeating function, a gas evenly-diffusing function, a cushion function, and a thermal expansion difference absorbing function.

The metallic separators 10, which are each formed into a rectangular plate form, and are made of a heat-resistant metal such as stainless steel.

On both sides of the solid electrolyte 2 of each of the plate-shaped unit cells 1 are arranged first and second metal plates 21 and 22 in a rectangular frame form, respectively. Peripheral edges of the two metal plates 21 and 22 overhang outwards from a peripheral edge of the solid electrolyte 2. In the first metal plate 21 on the fuel electrode 4 side, the fuel electrode 4 and a part of the fuel electrode power collector 11 are received. A side surface of the first metal plate 21, a side surface of the separator 10 opposite to this side surface, and a fuel passage forming member 33 sandwiched between the first metal plate 21 and the separator 10 constitute a fuel passage 31 connected to the fuel supplying room S1. In the second metal plate 22 on the air electrode 3 side, the air electrode 3 and a part of the air electrode power collector 12 are received. A side surface of the second metal plate 22, a side surface of the separator 10 opposite to this side surface, and an air passage forming member 34 sandwiched between the second metal plate 22 and the separator 10 constitute an air passage 32 connected to the air supplying room S2.

Between any pair of the metal plates 21 and 22 is sandwiched a metallic spacer 23, in a rectangular frame form, having substantially the same thickness as the solid electrolyte 2. The two metal plates 21 and 22 are bonded to each other by welding. The metallic spacer 23 surrounds the entire circumference of the peripheral edge of the solid electrolyte 2 with a predetermined gap C2 interposed therebetween. In this manner, the peripheral edge 2a of the solid electrolyte 2 is closed to be separated from the outside.

Inside the fuel supplying room S1 and the fuel passage 31, a fuel gas flows, for example, from the lower side in Fig. 1 to the upper side therein. For this purpose, a fuel inlet port 31a is made at the lower end of the fuel passage 31 in Fig. 1, and the fuel inlet port 31a is connected to a fuel supplying source (for example, a hydrogen supplying source). A discharge port 31b is made at the upper end, and the discharge port 31b is connected to the outside. In the meantime, inside the air supplying room S1 and the air passage 32, air flows in a direction perpendicular to the fuel gas. For example, an air inlet is made on this side (front side) of the paper surface on which Fig. 1 is drawn, and an air outlet is made on the other side (rear side).

Fig. 3 evidently illustrates any one of the plate-shaped unit cells 1; and the metal plates 21 and 22 therefor, and the metallic spacer 23 therefor. The first metal plate 21 on the fuel electrode 4 side has a larger area than the second metal plate 22 on the air electrode 3 side, and has substantially the same size as the separator 10. Between the side surface of the first metal plate 21 and the side surface of the separator 10 opposite to this side surface is bonded the fuel passage forming member 33, which is made of metal and surrounds the fuel passage 31 as descried above, by welding. The discharge port 31b and the fuel inlet port 31a are made at the upper and lower ends of the fuel passage forming member 33.

In Fig. 4, the peripheral edge 2a of the solid electrolyte 2 of the plate-shaped unit cell 1 is sandwiched from both sides thereof between the metal plates 21 and 22. Between the side surfaces of the metal plates 21 and 22 and both side surfaces of the peripheral edge 2a of the solid electrolyte are generated slight gaps C1 in which the fuel (fuel gas) or air (oxidizing gas) can flow. The two gaps C1 and the gap C2, which is present between the internal circumferential face of the spacer 23 and the peripheral edge of the solid electrolyte 2, constitute a U-shaped gap maze (C1 and C2) capable of releasing the fuel gas remaining in the fuel supplying room S1 and the fuel passage 31. The both-side gaps C1 each have a dimension value of about 0 since the side surfaces of the metal plates 21 and 22 actually contact the side surfaces of the peripheral edge 2a of the solid electrolyte 2; however, the gaps are exaggeratingly illustrated since the gaps are not easily illustrated as gaps in the figure. On the other hand, the gap C2 between the internal circumferential face of the spacer 23 and the peripheral edge of the solid electrolyte 2 actually keeps a predetermined interval certainly, thereby avoiding interference between the spacer 23 and the solid electrolyte 2 by a thermal expansion of the spacer 23.

### (Effect)

The power-generating effect of each of the fuel unit cells 1 is equivalent to that of conventional solid oxide fuel cells. In Fig. 1, hatched arrows represent the flow of the fuel (fuel containing hydrogen). Air (oxygen) supplied from the air supplying source through the air passage 32 to the air supplying room S2 passes through pores in the ceramic air electrode 3 to reach the vicinity of the interface between the ceramic and the solid electrolyte 2. The air then receives electrons from the air electrode 3 to be ionized to oxide ions (O²⁻). The oxide ions diffuse and shift toward the fuel electrode 4 in the solid electrolyte 2 at a temperature near an operating temperature of 800°C. The oxide ions which have reached the vicinity of the interface between the solid electrolyte and the fuel electrode 4 react with the fuel (H₂ or CO) supplied from the fuel passage 31 to the fuel supplying room S1, so as to generate reaction products (such as H₂O and CO₂) and discharge electrons to the fuel electrode 4.

The reactions at the electrodes are represented by the following formulae:
In the air electrode 3, 1/2O₂ + 2e⁻ → O²⁻
In the fuel electrode 4, H₂ + O²⁻ → H₂O + 2e⁻

In Fig. 4, a part (residual fuel or extra fuel) of the fuel supplied to the fuel supplying room S1 enters the gap C1 between one of the side surfaces of the peripheral edge 2a of the solid electrolyte 2 and one of the side surfaces of the first metal plate 21, and further passes through the gap C2 between the peripheral edge of the solid electrolyte 2 and the internal circumference of the spacer 23, and the gap C1 between the other side surface of the peripheral edge 2a of the solid electrolyte 2 and one of the side surfaces of the second metal plate 22 so as to be released to the air passage 31 side. A part of the air supplied to the air supplying room S2 also passes through the gap C1 between the side surface of the peripheral edge 2a of the electrolyte 2 and the side surface of the second metal plate 22 so as to be supplied to the gap C2 between the peripheral edge 2a of the solid electrolyte 2 and the internal circumferential face of the spacer 23. Since the fuel supplying room S1 has an internal pressure based on the fuel gas; from the outside, air hardly flows reversely into the gaps C1 and the gap C2. For this reason, a deterioration in the fuel electrode 4 by back diffusion of air can be prevented, and further a useless release of the residual fuel can be prevented so that the use efficiency of the fuel can be improved.

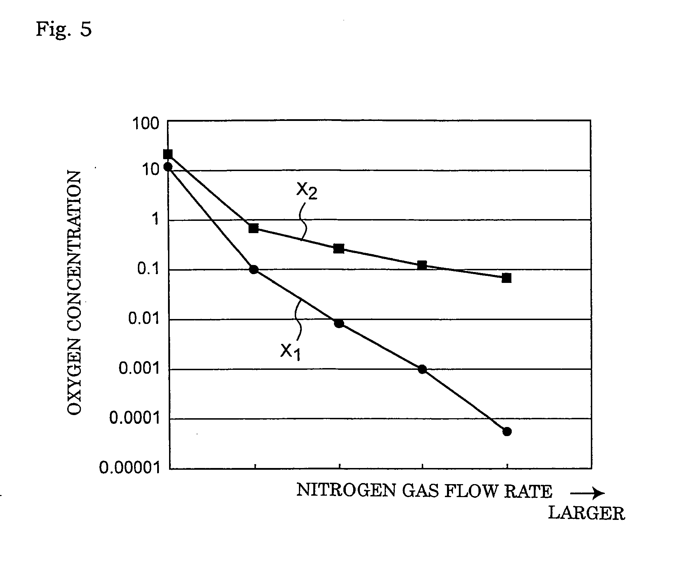

Fig. 5 shows a table wherein the present embodiment and one of the prior arts (Patent Document 3 described above) were compared with each other about sealability. The prior art has a structure wherein the spacers 23 in Figs. 1 and 4 are not formed and the peripheral edges of the solid electrolytes 2 are opened. In the experiment, specifically, air was caused to flow onto the air passage 32 sides in Fig. 1; instead of the fuel gas, nitrogen gas was caused to flow onto the fuel passage 31 sides; the solid electrolytes 2 were operated as oxygen sensors; and the concentration of oxygen on the fuel electrode 4 sides was measured, thereby evaluating the effect of sealing the gas.

The transverse axis of Fig. 5 represents the flow rate of nitrogen flowing into the fuel passage, and the vertical axis represents the oxygen concentration in the fuel electrodes. This oxygen concentration is shown as a logarithm thereof. Graph X1 is a change in the oxygen concentration in the present embodiment, and graph X2 is the oxygen concentration in the prior art having no spacer.

As is evident from Table 5, the oxygen concentration (X1) in the embodiment is largely reduced as compared with that (X2) in the prior art; as the nitrogen flow rate is made larger, the concentration is reduced to 1/10 to 1/1000 of that in the prior art.

### [Other embodiments]

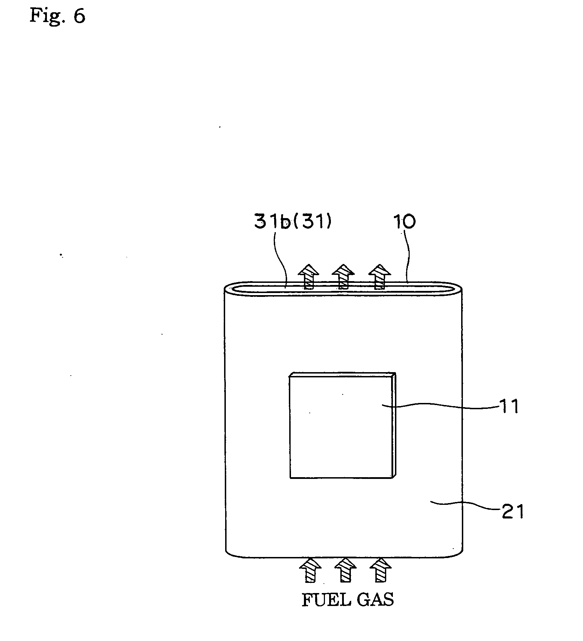

(1) Fig. 6 shows a modified example of the metal plate 21 on any fuel electrode 4 side. A cylinder member made of stainless steel is worked into a crushed form, thereby forming the first metal plate 21 and the separator 10 opposite to this plate so as to be integrated with each other. The inside of the crushed-form cylinder member constitutes a fuel passage 31. According to this structure, the number of parts can be reduced and further the sealability of the fuel passage 31 is improved.
(2) In the above-mentioned embodiment, any one of the metallic separators 23 is formed from a member different from the first and second metal plates 21 and 22, as illustrated in Figs. 1 and 4; however, the metal separator 23 and the second metal plate 22, the area of which is small, on the air electrode side may be produced as an integrated product by pressing.

## Claims

1. A plate solid oxide fuel cell, wherein plate-shaped unit cells each composed of a plate-shaped solid electrolyte, and a fuel electrode and an air electrode arranged on both side surfaces of the solid electrolyte, respectively, are arranged to be alternated with metallic separators; a fuel supplying room is formed between the fuel electrode and the side surface of the metallic separator opposite to this fuel electrode; and an air supplying room is formed between the air electrode and the side surface of the metallic separator opposite to this air electrode;
**characterized in that** a peripheral edge of the solid electrolyte overhangs outwards from peripheral edges of the fuel electrode and the air electrode, and is sandwiched directly from both sides thereof between two metal plates;
peripheral edges of the two metal plates overhang outwards from the peripheral edge of the solid electrolyte;
a space between the peripheral edges of the two metal plates is closed with a metallic spacer surrounding the peripheral edge of the solid electrolyte from the outside; and
a gap between the two metal plates and both side surfaces of the peripheral edge of the solid electrolyte constitutes a maze for a fuel.

2. The plate solid oxide fuel cell according to claim 1, wherein a fuel passage forming member which is made of metal and has a fuel inlet port and a discharge port is sandwiched between the metal plate at the fuel electrode side and the metallic separator opposite to this metal plate, and the fuel supplying room and a fuel passage connected to this room are made of this metallic separator, this metal plate, and the fuel passage forming member.

3. The plate solid oxide fuel cell according to claim 1, wherein a crushed-form flat cylinder member is used to form the metal plate at the fuel electrode side and the metallic separator opposite to this metal plate so as to be integrated with each other, and the fuel supplying room and a fuel passage connected to this room are formed inside the cylinder member.
